# EUROPEAN PATENT SPECIFICATION

(11) **EP 3 414 433 B1**
(45) Date of publication and mention of the grant of the patent: **06.11.2019**
(21) Application number: 17701001.4
(22) Date of filing: 03.01.2017
(51) Int. Cl.: F01N 3/04, F01N 13/10

(54) **INTERNAL COMBUSTION PISTON ENGINE**
KOLBENMOTOR MIT INTERNER VERBRENNUNG
MOTEUR À PISTON À COMBUSTION INTERNE

(30) Priority: 12.02.2016 FI 20165106
(43) Date of publication of application: 19.12.2018
(73) Proprietor: Wärtsilä Finland Oy, 65100 Vaasa (FI)
(72) Inventor: HÖSTMAN, Sören, FI-65100 Vaasa (FI); MÄKINEN, Katri, FI-65100 Vaasa (FI); LARSON, Leif, FI-65100 Vaasa (FI); GRANLUND, Ulf, FI-65100 Vaasa (FI)
(74) Representative: Genip Oy
(86) International application number: PCT/FI2017/050002
(87) International publication number: WO 2017/137654

(56) References cited:
- EP-A1- 2 669 485
- EP-A2- 2 340 364
- GB-A- 1 541 966
- GB-A- 2 168 426
- US-A1- 2013 000 287
- US-B1- 6 363 717

## Description

### Technical field

The present invention relates to an internal combustion piston engine being provided with a heat shield according to the preamble of claim 1.

### Background art

In internal combustion piston engines the exhaust gas from each cylinder is led away to further processing via an exhaust gas duct. The exhaust gas is typically considerably hot, for example up to and over 500°C. Therefore the outer surfaces of the exhaust gas duct will also be at high temperature. Hot surfaces on the engine poses e.g. a potential risk of fire.

As examples of prior art solutions DE 29518189 U1 and US 5311738 are referred to, which disclose a cooled enclosure covering an exhaust gas manifold of an internal combustion piston engine.

US 5020319 discloses a cooled casing for an internal combustion engine which is provided with an inner ceramic inner wall.

EP 2 669 485 A1 discloses a directly cooled exhaust gas duct of an internal combustion piston engine, which is formed of multiple spacer segments provided with a coolant passage.

EP 2 340 364 A2 discloses an exhaust gas manifold which includes one or more liquid cooling passages.

GB 1 541 966 A discloses a water cooled exhaust manifold with heat insulating cover for exhaust pipes in an internal combustion piston engine.

US 6 363 717 B1 discloses an exhaust gas duct with an exhaust gas guide channel which is placed, leaving an air-filled space, in a protecting covering where circulates a cooling liquid and enclosing at least partially said exhaust gas guide channel.

GB 2 168 426 A discloses tubular ducts for carrying exhaust gases extend within a liquid cooled housing and comprising tubular sections which has a branch for receiving exhaust gas from the respective cylinder and the manifold includes centring connectors which are inside the housing and co-operate with the respective branches.

US 2013/000287 A1 discloses an exhaust manifold configured to be coupled to a cylinder head of an internal combustion which engine includes a manifold section. The manifold section includes a manifold tube configured to receive exhaust gas from the cylinder head, and a water jacket tube at least partially defining a tube configured to receive cooling fluid.

An object of the invention is to provide an internal combustion piston engine in which the safety issues in respect of hot surfaces are improved without undue cooling of exhaust gases.

### Disclosure of the Invention

The objects of the invention can be met substantially as is disclosed in the independent claim and in the other claims describing more details of different embodiments of the invention. The invention is defined in appended claims 1-8.

According to an embodiment of the invention an internal combustion piston engine comprises a cylinder head and an exhaust gas duct connected to the cylinder head, and a heat shield releasably fixed to the cylinder head of the engine, which heat shield comprises a body provided with an internal cavity for circulation of cooling fluid, and a first cooling fluid opening and a second cooling fluid opening arranged to communicate with the internal cavity. The body of heat shield forms a collar around the exhaust gas duct and the heat shield is provided with an aperture extending from a first end of the body to the second end of the body, through which aperture the exhaust gas duct extends. Further there is a gap provided between the exhaust gas duct and the heat shield collar, and the first cooling fluid opening is arranged to communicate with cooling channel of the cylinder head and the second cooling fluid opening is arranged at a radial distal end of the heat shield from a center line of the aperture.

This provides an effect that the heat transfer from and/or access to the hottest area of the exhaust gas duct is minimized without undue cooling of the exhaust gas. Since the exhaust gas is not cooled the efficiency of the turbo-charger and any possible subsequent heat recovery systems is increased.

According to the invention the aperture extends from a first end of the body to the second end of the body and the second end of the body is provided with a slot opening in a direction transverse to the longitudinal axis of the aperture, for retaining an insulation panel between the heat shields of two successive cylinder heads in the engine.

According to the invention the body of the heat shield is provided with a sealing contact surface into which the first cooling fluid opening is arranged and the cooling fluid channel of the cylinder head is connected to the first cooling fluid opening of the heat shield for discharging cooling fluid from the cylinder head to the heat shield.

According to an embodiment of the invention the engine is a V-engine and that the engine is provided with insulation panels which enclose a space between the engine's cylinder banks where the exhaust gas ducts are arranged to run, and that the heat shields are provided with a contact surface for the insulation panels which surrounds the edge of each heat shield in a sealed manner.

According to an embodiment of the invention the second cooling fluid openings of two successive heat shields are connected with each other for collectively collect the cooling fluid from the cylinder heads of the engine.

According to the invention the second cooling fluid opening comprises two opposite openings on a plane perpendicular to the planar contact surface.

According to an embodiment of the invention the shape of the heat shield is rectangular providing rectangular form gap area to the aperture and the exhaust gas duct is of tubular form.

According to the invention the second cooling fluid opening of the heat shield is arranged at a radial distal end of the heat shield such that the opening is located above the cylinder head body.

The fist cooling fluid opening and the second cooling fluid openings in the body of the heat shield are arranged to different positions to the heat shield and therefore the heat shield serves also as a coupling member in a cooling system of the engine. By means of the heat shield the cooling fluid which controls the temperature of the cylinder head may be discharged from the cylinder head via the heat shield.

The body of the heat shield is provided with a sealing contact surface into which the first cooling fluid opening is arranged for communicating with a cooling fluid channel of the cylinder head.

Also the body of the heat shield is provided with means for releasably fixing the body to a cylinder head of the engine.

According to an embodiment of the invention in the engine cooling fluid channel of the cylinder head is connected to the first cooling fluid opening of the heat shield for discharging cooling fluid from the cylinder head to the heat shield.

According to an embodiment of the invention the second cooling fluid openings of the heat shields are connected with each other collectively collect the cooling fluid from the cylinder heads of the engine.

According to an embodiment of the invention second fluid opening of the heat shield is arranged at a radial distal end of the heat shield such that the opening is located above the cylinder head body. The term "above" refers here to relative position in the longitudinal direction of a cylinder of the engine from the crank case towards the cylinder head. This way the installation of cooling fluid channels connecting the heat shields is made easier.

The exemplary embodiments of the invention presented in this patent application are not to be interpreted to pose limitations to the applicability of the appended claims. The verb "to comprise" is used in this patent application as an open limitation that does not exclude the existence of also unrecited features. The features recited in depending claims are mutually freely combinable unless otherwise explicitly stated. The novel features which are considered as characteristic of the invention are set forth in particular in the appended claims.

### Brief Description of Drawings

In the following, the invention will be described with reference to the accompanying exemplary, schematic drawings, in which
Figure 1 illustrates a schematically one cylinder 12 of a multi cylinder internal combustion piston engine according to the first embodiment of the invention,
Figure 2 illustrates a heat shield for an exhaust gas duct according to an embodiment of the invention,
Figure 3 illustrates a heat shield for an exhaust gas duct according to an embodiment of the invention,
Figure 4 illustrates a view of the heat shield for an exhaust gas duct according to an embodiment of the invention,
Figure 5 illustrates a heat shield for an exhaust gas duct according to an embodiment of the invention,
Figure 6 illustrates a heat shield for an exhaust gas duct according to an embodiment of the invention, and
Figure 7 illustrates a V-engine comprising heat shields according to an embodiment of the invention.

### Detailed Description of Drawings

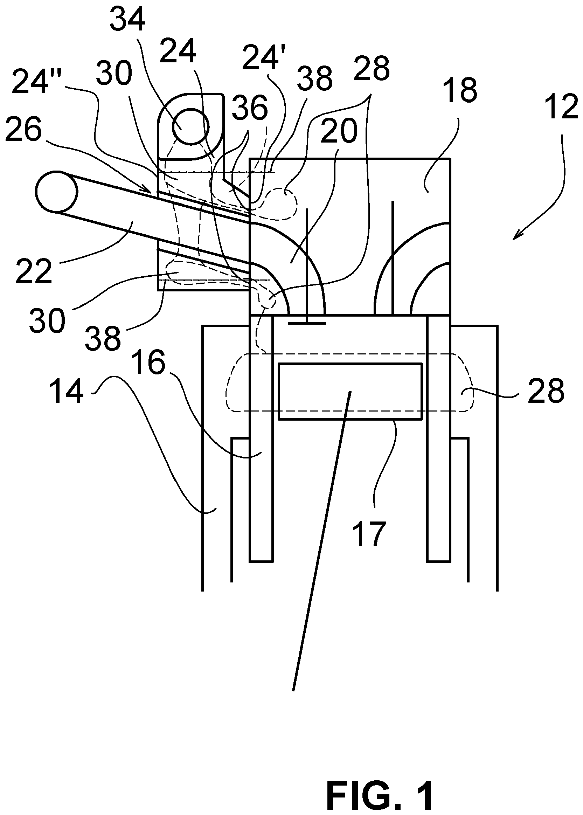

Figure 1 depicts schematically one cylinder 12 of a multi cylinder internal combustion piston engine. The cylinders in the engine may be arranged in various configurations such as in-line or in V-configuration. The engine comprises a block 14 or a frame into which a cylinder liner 16 is arranged. The cylinder may also be arranged directly to the block by making an appropriate cylinder bore therein. A cylinder head 18 is arranged on the top of the cylinder liner in sealed manner forming a combustion chamber into the cylinder between the cylinder head and piston 17. The cylinder head and its components may vary but it is known as such to a skilled person in the art. The cylinder head comprises an exhaust gas port 20 and there is an exhaust gas duct 22 removably attached to the cylinder head 18 at the location of the exhaust gas port 20. This way the exhaust gases may be exhausted from the cylinder to the exhaust gas duct 20 and further to e.g. a turbo-charger of the engine.

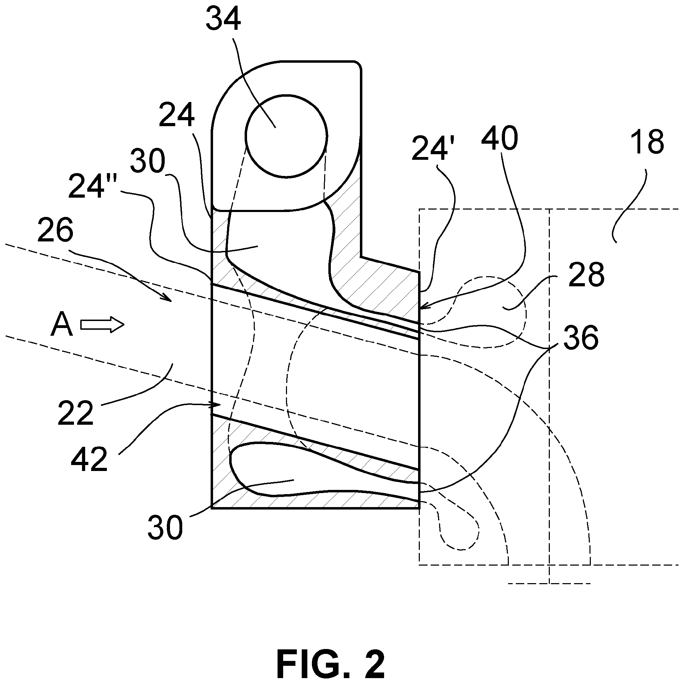

In order to seal off the exhaust gas duct from transferring heat to the surroundings and prevent access to the hot surface of the exhaust gas duct there is a heat shield 24 arranged in connection with the exhaust gas duct. Particularly, the heat shield 24 is arranged to circumscribe the exhaust gas duct 22 at its end joining to the cylinder head 18. This way the surface of the exhaust gas duct at high temperature near the cylinder head 18 is covered by the heat shield 24. The heat shield 24 is shown in more detailed manner in the figure 2.

Now referring to the figures 1 and 2, the body of the heat shield 24 is provided with an aperture 26 which extends from a first end 24' to the second end 24" of the body. The first and the second ends are referring to sides of the heat shield in respect to the direction of the aperture 26. The heat shield 24 is a collar - like structure, which when installed to the engine is around the exhaust gas duct 22 extending from the cylinder head 18 over a predetermined distance. The heat shield forms a collar - or a sleeve - around the exhaust gas duct 22, such that there is a gap between the exhaust gas duct 22 and the heat shield 24. Thus, the exhaust gas duct 22 extends from the cylinder head 18 through the aperture 26 of the heat shield 24 and the heat shield covers the hot surface of the exhaust gas duct 22.

The heat shield 24 is fixed releasably to the side of the cylinder head 18 by suitable means 38, such as machine screws, in a manner apparent to a person skilled in the art.

The engine and the cylinder head are cooled by a cooling liquid arranged to circulate through cooling fluid channels 28 arranged to the parts of the engine. The cooling fluid channel 28 of the cylinder 16 and the cylinder head 18 are shown in the figure 1 with dotted lines. The heat shield 24, more precisely its body, which is referred to by using the same reference number in the following, is provided with an internal cavity 30 for circulation of the cooling fluid. The cavity 30 is arranged in flow connection with the cooling channel 28 of the cylinder head 18. There is a first cooling fluid opening 36 in the body 24 arranged to communicate with the cavity 30 and also the cooling fluid channel 28 of the cylinder head 28 when in use in connection with the engine. Additionally the body is provided with a second cooling fluid opening 34. Advantageously the cooling fluid flow direction is such that the first cooling fluid opening is a cooling fluid inlet and the second cooling fluid opening 34 is a cooling fluid outlet.

The body 24 of the heat shield is provided with a sealing contact surface 40 (see figure 2) at the first end 24' of the body 24. In the embodiment shown in the figures 1 and 2 the first cooling fluid opening 36 comprises two separate openings on the planar contact surface on opposite sides of the exhaust port. The second cooling fluid opening 34 is arranged at a radial distal end of the heat shield. In this connection the term radial should be understood as taken from an imaginary centreline of the aperture 26 in its longitudinal direction.

According to the embodiment of the figures 1 and 2 the second cooling fluid opening 34 comprises two opposite openings on a plane perpendicular to the planar contact surface 40. According to the invention, when installed to the engine the second fluid openings are this way oriented automatically such that each two successive heat shields may be connected with each other at their second cooling fluid openings for collectively collect the cooling fluid from the number of cylinder heads of the engine. The cooling fluid is arranged to flow from the cylinder head to the heat shield 24 and further from the heat shield the cooling fluid is recirculated back to the engine after possible temperature control system. The sealing contact surface may be for example a planar contact surface such that a sealing plate may be installed between the heat shield and the cylinder heat 18. The sealing contact surface 40 is formed to meet the form of the cylinder head such that proper sealing and support is achieved.

The sealing contact surface circumscribes the aperture 26 in the body 24. The aperture defines a space for the exhaust gas duct 22. The space is somewhat greater than the exhaust gas duct, or its cross sectional area. This way a gap 42 is provided between the exhaust gas duct 22 and the heat shield 24. The first cooling fluid opening 36 is arranged to open into the planar contact surface 40. This way the first cooling fluid opening 36 is arranged for communicating with a cooling fluid channel 28 of the cylinder head 18.

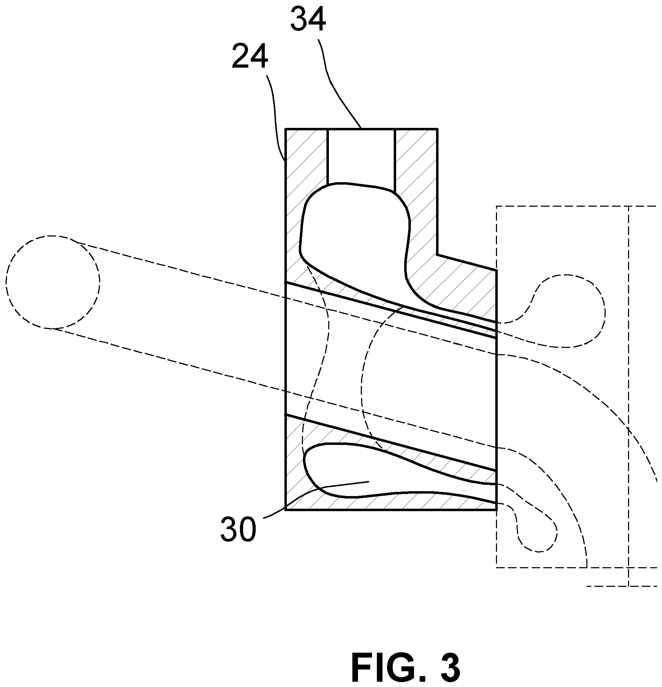

In the figure 3 there is shown an embodiment where the second cooling fluid opening 34 is also arranged at a radial distal end of the heat shield, but it consists of one opening having an opening direction coinciding with the planar contact surface 40. In other words the opening direction substantially radial to the direction of the aperture 26, or substantially transverse to the direction of the aperture 26 and arranged at the peripheral edge of the body 24.

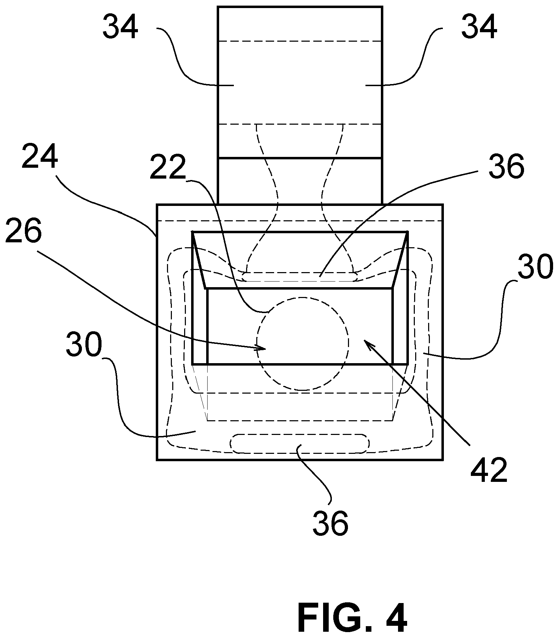

In the figure 4 there is shown the heat shield of figure 2 seen from the direction A. As can be seen the shape of the heat shield is not necessarily circular, but is may be generally rectangular as is shown in the figure 4. The rectangular form larger cap area 42 at the corners of the aperture when the exhaust gas duct 22 is of tubular form. Large gap area improves ventilation and cooling of the gap area. Additionally, the larger gap area makes is possible to install or remove the exhaust gas duct 20 to/from the cylinder head while the heat shield is on its position.

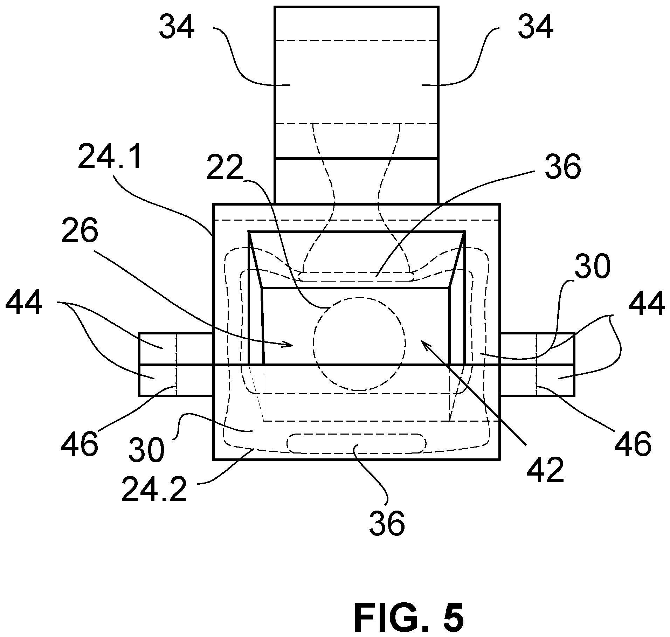

In the figure 5 there is shown an embodiment of the heat shield of figure 4 in which the body is formed of two separate parts 24.1, 24.2. The parts are provided with lugs 44 by means of which the part may be assembled by e.g. screw joints. This makes the manufacturing of the cavities 30 into the heat shield 24 more straightforward.

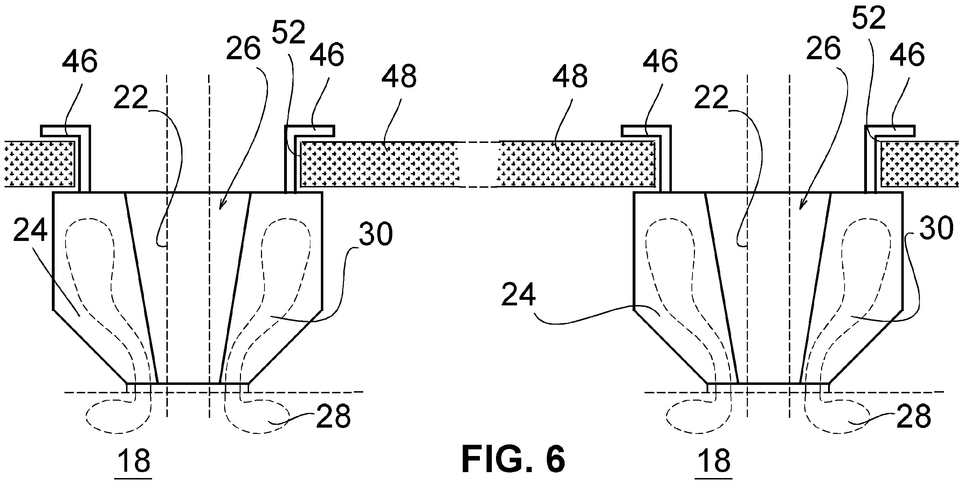

In the figure 6 there is shown a sectional view of an embodiment of the heat shield along the aperture 26. The heat shield 24 is provided with retaining slots 46 at its opposite sides for retaining an insulation panel 48 between the heat shields of two successive cylinder head 18 in the engine. The heat shields are provided with a contact surface 52 for the insulation panels 48 which surrounds the edge of each heat shield in a sealed manner. Now, in this case the heat shield fulfils several functions. Firstly, as in all the embodiments of the invention the heat shield 24 provides a barrier against accessing to the hot surface of the exhaust duct near the cylinder head 18. Secondly, the heat shield 24 provides an advantageous manner of leading cooling fluid out of the number of cylinder heads 18 of a multi-cylinder engine and conveniently combine the cooling fluid of flowing out of the cylinder heads 18. Thirdly, the heat shield 24 provides an attachment means for the insulation panel 487 between the successive cylinder heads 18 or generally the engine between the heat shields 24.

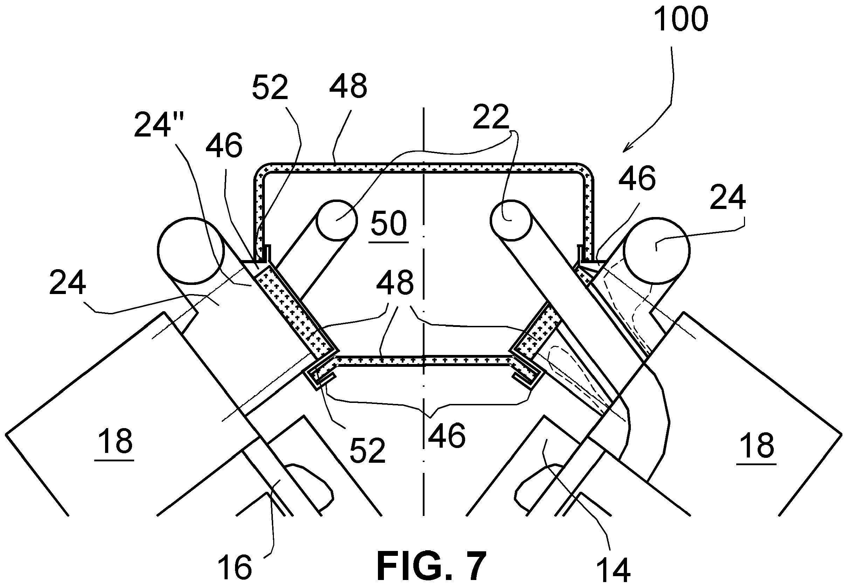

In the figure 7 there is shown a sectional view of an internal combustion piston engine 100 with V-configuration. In the figure 7 the functionality of the heat shields 24 of participating in retaining the insulation panel 48 is described in more detailed manner. Here the heat shields 24 are provided with retaining slots 46 at the second end 24" of the heat shields. The engine is provided with insulation panels 48 which enclose a space 50 between the engine's cylinder banks where the exhaust gas ducts are arranged to run. The heat shields are provided with a contact surface 52 for the insulation panels 48 which surrounds the edge of each heat shield in a sealed manner. The slots 46 at the heat shield are used for retaining the insulation panels at their positions and the insulation panels 48 are connected to the heat shields 24 such that the hot exhaust gas ducts are inside the enclosure formed by the insulation panels 48.

The heat shield 24 provides a barrier against accessing to the hot surface of the exhaust ducts near the cylinder head 18. Secondly, the heat shield 24 provides an advantageous manner of leading cooling fluid out of the number of cylinder heads 18 of a multi-cylinder engine and conveniently combine the cooling fluid of flowing out of the cylinder heads 18. Thirdly, the heat shield 24 provides an attachment means for the insulation panel 487 between the successive cylinder heads 18 or generally the engine between the heat shields 24. The slots 24 may be differently orientated at different sides to facilitate the attachment of respective insulation panel 48.

While the invention has been described herein by way of examples in connection with what are, at present, considered to be the most preferred embodiments, it is to be understood that the invention is not limited to the disclosed embodiments, but is intended to cover various combinations or modifications of its features, and several other applications included within the scope of the invention, as defined in the appended claims. The details mentioned in connection with any embodiment above may be used in connection with another embodiment when such combination is technically feasible.

## Claims

1. Internal combustion piston engine comprising a cylinder head and an exhaust gas duct (22) connected to the cylinder head, and a heat shield (24) releasably fixed to the cylinder head of the engine, which heat shield comprises a body provided with an internal cavity (30) for circulation of cooling fluid, and a first cooling fluid opening (36) and a second cooling fluid opening (34) arranged to communicate with the internal cavity (30), the heat shield body is provided with an aperture (26) extending from a first end of the body to the second end of the body, and that the exhaust gas duct (22) extends from the cylinder head (18) through the aperture (26) of the heat shield (24) body such that the heat shield (24) body is arranged to circumscribe the exhaust gas duct (22) at its end joining to the cylinder head (18), wherein a gap (42) is provided between the exhaust gas duct (22) extending from the cylinder head (18) and the heat shield (24) body, and that body of the heat shield is provided with a sealing contact surface into which the first cooling fluid opening (36) is arranged to communicate with cooling channel (28) of the cylinder head, **characterized in that** the second cooling fluid opening (34) comprises two opposite openings on a plane perpendicular to the planar sealing contact surface arranged at a radial distal end of the heat shield from a center line of the aperture (26) such that each two successive heat shields (24) may be connected with each other at their second cooling fluid openings (34) for collectively collect the cooling fluid from the number of cylinder heads (18) of the engine.

2. Internal combustion piston engine according to claim 1, **characterized in that** the aperture (26) extends from a first end of the body to the second end of the body and the second end of the body is provided with a slot (46) opening in a direction transverse to the longitudinal axis of the aperture (26), for retaining an insulation panel (48) between the heat shields of two successive cylinder heads (18) in the engine.

3. Internal combustion piston engine according to claim 1, **characterized in that** body of the heat shield is provided with a sealing contact surface into which the first cooling fluid opening (36) is arranged and the cooling fluid channel (28) of the cylinder head (18) is connected to the first cooling fluid opening (36) of the heat shield (24) for discharging cooling fluid from the cylinder head to the heat shield (24).

4. Internal combustion piston engine according to claim 1 or 2, **characterized in that** the engine (100) is a V-engine and that the engine is provided with insulation panels (48) which enclose a space (50) between the engine's cylinder banks where the exhaust gas ducts (22) are arranged to run, and that the heat shields (24) are provided with a contact surface (52) for the insulation panels (48) which surrounds the edge of each heat shield (24) in a sealed manner.

5. Internal combustion piston engine according to claim 1, **characterized in that** the second cooling fluid openings (34) of two successive heat shields are connected with each other for collectively collect the cooling fluid from the cylinder heads of the engine.

6. Internal combustion piston engine according to claim 1, **characterized in that** the shape of the heat shield (24) is rectangular providing rectangular form gap area to the aperture (26) and that the exhaust gas duct (22) is of tubular form.

7. Internal combustion piston engine according to claim 1, **characterized in that** the second cooling fluid opening (34) of the heat shield (24) is arranged at a radial distal end of the heat shield (24) such that the opening is located above the cylinder head (18) body.

8. Internal combustion piston engine according to claim 1, **characterized in that** the second fluid opening of the heat shield is located above the cylinder head body.

## Patentansprüche

1. Kolbenverbrennungsmotor, der einen Zylinderkopf und ein Abgasrohr (22), das mit dem Zylinderkopf verbunden ist, und ein Hitzeschild (24), das entfernbar an dem Zylinderkopf des Motors befestigt ist, aufweist, wobei das Hitzeschild einen Körper, der mit einem Innenhohlraum (30) für Kühlflüssigkeitszirkulation versehen ist, und eine erste Kühlflüssigkeitsöffnung (36) und eine zweite Kühlflüssigkeitsöffnung (34), die dazu angeordnet sind, mit dem Innenholraum (30) in Verbindung zu sein, aufweist, wobei der Hitzeschildkörper mit einem Loch (26) versehen ist, das sich von einem ersten Ende des Körpers zu dem zweiten Ende des Körpers erstreckt, und das Abgasrohr (22) erstreckt sich von dem Zylinderkopf (18) durch das Loch (26) des Körpers des Hitzeschilds (24) derart, dass der Körper des Hitzeschilds (24) dazu angeordnet ist, das Abgasrohr (22) an seinem Ende, das mit dem Zylinderkopf (18) verbunden ist, zu begrenzen, wobei ein Spalt (42) zwischen dem Abgasrohr (22) vorgesehen ist, der sich von dem Zylinderkopf (18) und dem Körper des Hitzeschilds (24) erstreckt, und der Körper des Hitzeschilds ist mit einer Dichtkontaktfläche versehen, in die die erste Kühlflüssigkeitsöffnung (36) angeordnet ist, um mit dem Kühlkanal (28) des Zylinderkopfs in Verbindung zu sein, **dadurch gekennzeichnet, dass** die zweite Kühlflüssigkeitsöffnung (34) zwei gegenüberliegende Öffnungen auf einer Ebene senkrecht zu der ebenen Dichtkontaktfläche an einem radialen distalen Ende des Hitzeschilds von einer Mittenlinie des Lochs (26) angeordnet aufweist, derart dass alle zwei aufeinanderfolgenden Hitzeschilder (24) an ihren zweiten Kühlflüssigkeitsöffnungen (34) miteinander verbunden werden können, um die Kühlflüssigkeit gemeinsam von der Anzahl an Zylinderköpfen (18) des Motors zu sammeln.

2. Kolbenverbrennungsmotor nach Anspruch 1, **dadurch gekennzeichnet, dass** sich das Loch (26) von einem ersten Ende des Körpers zu dem zweiten Ende des Körpers erstreckt und das zweite Ende des Körpers mit einer Schlitz(46)-Öffnung in einer Richtung quer zu der Längsachse des Lochs (26) versehen ist, um eine Isolierplatte (48) zwischen den Hitzeschildern von zwei aufeinanderfolgenden Zylinderköpfen (18) in dem Motor zu halten.

3. Kolbenverbrennungsmotor nach Anspruch 1, **dadurch gekennzeichnet, dass** der Körper des Hitzeschilds mit einer Dichtkontaktfläche versehen ist, in welche die erste Kühlflüssigkeitsöffnung (36) angeordnet ist, und der Kühlflüssigkeitskanal (28) des Zylinderkopfs (18) ist mit der ersten Kühlflüssigkeitsöffnung (36) des Hitzeschilds (24) zum Abgeben von Kühlflüssigkeit von dem Zylinderkopf zu dem Hitzeschild (24) verbunden.

4. Kolbenverbrennungsmotor nach Anspruch 1 oder 2, **dadurch gekennzeichnet, dass** der Motor (100) ein V-Motor ist und dass der Motor mit Isolierplatten (48) versehen ist, die einen Raum (50) zwischen den Zylinderbänken des Motors, wo die Abgasrohre (22) verlaufend angeordnet sind, einschließen, und dass die Hitzeschilder (24) mit einer Kontaktfläche (52) für die Isolierplatten (48) versehen sind, die den Rand jedes Hitzeschilds (24) auf dichtende Weise umgibt.

5. Kolbenverbrennungsmotor nach Anspruch 1, **dadurch gekennzeichnet, dass** die zweiten Kühlflüssigkeitsöffnungen (34) von zwei aufeinanderfolgenden Hitzeschildern miteinander verbunden sind, um gemeinsam die Kühlflüssigkeit von den Zylinderköpfen des Motors zu sammeln.

6. Kolbenverbrennungsmotor nach Anspruch 1, **dadurch gekennzeichnet, dass** die Form des Hitzeschilds (24) rechteckig ist und einen rechteckförmigen Spaltbereich für das Loch (26) vorsieht, und dass das Abgasrohr (22) eine rohrförmige Form aufweist.

7. Kolbenverbrennungsmotor nach Anspruch 1, **dadurch gekennzeichnet, dass** die zweite Kühlflüssigkeitsöffnung (34) des Hitzeschilds (24) an einem radialen distalen Ende des Hitzeschilds (24) angeordnet ist, derart dass sich die Öffnung über dem Körper des Zylinderkopfs (18) befindet.

8. Kolbenverbrennungsmotor nach Anspruch 1, **dadurch gekennzeichnet, dass** sich die zweite Flüssigkeitsöffnung des Hitzeschilds über dem Körper des Zylinderkopfs befindet.

## Revendications

1. Moteur à piston à combustion interne comprenant une tête de cylindre et un conduit de gaz d'échappement (22) raccordé à la tête de cylindre, ainsi qu'un écran thermique (24) fixé de façon amovible à la tête de cylindre du moteur, ledit écran thermique comprenant un corps pourvu d'une cavité interne (30) pour la circulation d'un liquide de refroidissement, et une première ouverture de liquide de refroidissement (36) et une deuxième ouverture de liquide de refroidissement (34) disposées de manière à communiquer avec la cavité interne (30), le corps de l'écran thermique étant pourvu d'un passage (26) s'étendant à partir d'une première extrémité du corps jusqu'à une deuxième extrémité du corps, et dans lequel le conduit de gaz d'échappement (22) s'étend à partir de la tête de cylindre (18) à travers la passage (26) du corps de l'écran thermique (24), de sorte que le corps de l'écran thermique (24) est conçu pour entourer le conduit de gaz d'échappement (22) à son extrémité raccordée à la tête de cylindre (18), dans lequel un espace (42) est prévu entre le conduit de gaz d'échappement (22) s'étendant à partir de la tête de cylindre (18) et le corps de l'écran thermique (24), et dans lequel le corps de l'écran thermique est pourvu d'une surface de contact d'étanchéité dans laquelle est disposée la première ouverture de liquide de refroidissement (36) pour communiquer avec un canal de refroidissement (28) de la tête de cylindre, **caractérisé en ce que** la deuxième ouverture de liquide de refroidissement (34) comprend deux ouvertures opposées sur un plan perpendiculaire à la surface de contact d'étanchéité planaire disposée à une extrémité distale radiale de l'écran thermique à partir d'une ligne médiane du passage (26), de sorte que deux écrans thermiques (24) successifs peuvent être reliés respectivement l'un à l'autre au niveau de leurs deuxièmes ouvertures de liquide de refroidissement (34) pour collecter conjointement le liquide de refroidissement à partir du nombre de têtes de cylindre (18) du moteur.

2. Moteur à piston à combustion interne selon la revendication 1, **caractérisé en ce que** le passage (26) s'étend à partir d'une première extrémité du corps jusqu'à la deuxième extrémité du corps, et la deuxième extrémité du corps est pourvue d'une fente (46) s'ouvrant dans une direction transversale à l'axe longitudinal du passage (26), pour retenir un panneau isolant (48) entre les écrans thermiques de deux têtes de cylindre (18) successives dans le moteur.

3. Moteur à piston à combustion interne selon la revendication 1, **caractérisé en ce que** le corps de l'écran thermique est pourvu d'une surface de contact d'étanchéité sur laquelle est disposée la première ouverture de liquide de refroidissement (36), et le canal de liquide de refroidissement (28) de la tête de cylindre (18) est relié à la première ouverture de liquide de refroidissement (36) de l'écran thermique (24) pour décharger du liquide de refroidissement à partir de la tête de cylindre vers l'écran thermique (24) .

4. Moteur à piston à combustion interne selon la revendication 1 ou 2, **caractérisé en ce que** le moteur (100) est un moteur en V et **en ce que** le moteur est pourvu de panneaux isolants (48) entourant un espace (50) entre les bancs de cylindres où s'étendent les conduits de gaz d'échappement (22), et **en ce que** les écrans thermiques (24) sont pourvus d'une surface de contact (52) pour les panneaux isolants (48), laquelle entoure le bord de chaque écran thermique (24) d'une manière étanche.

5. Moteur à piston à combustion interne selon la revendication 1, **caractérisé en ce que** les deuxièmes ouvertures de liquide de refroidissement (34) de deux écrans thermiques successifs sont reliées l'une à l'autre pour collecter conjointement le liquide de refroidissement à partir des têtes de cylindre du moteur.

6. Moteur à piston à combustion interne selon la revendication 1, **caractérisé en ce que** la forme de l'écran thermique (24) est rectangulaire, conférant ainsi une zone d'espace de forme rectangulaire au passage (26), et **en ce que** le conduit de gaz d'échappement (22) présente une forme tubulaire.

7. Moteur à piston à combustion interne selon la revendication 1, **caractérisé en ce que** la deuxième ouverture de liquide de refroidissement (34) de l'écran thermique (24) est disposée à une extrémité distale radiale de l'écran thermique (24), de sorte que l'ouverture se trouve au-dessus du corps de la tête de cylindre (18).

8. Moteur à piston à combustion interne selon la revendication 1, **caractérisé en ce que** la deuxième ouverture de liquide de l'écran thermique se trouve au-dessus du corps de la tête de cylindre.
